# EUROPÄISCHE PATENTSCHRIFT

(11) **EP 3 738 937 B1**
(45) Veröffentlichungstag und Bekanntmachung des Hinweises auf die Patenterteilung: **09.10.2024**
(21) Anmeldenummer: 20170904.5
(22) Anmeldetag: 22.04.2020
(51) Int. Cl.: C03B 11/08, C03C 19/00, G04B 39/00, G04D 3/00

(54) **VERFAHREN ZUM HERSTELLEN EINES UHRGLASES MIT MINDESTENS EINER AUSNEHMUNG UND WERKZEUG FÜR EIN DERARTIGES VERFAHREN**
METHOD OF MANUFACTURING A WATCH GLASS WITH AT LEAST ONE RECESS AND TOOL FOR SUCH A METHOD
PROCÉDÉ DE FABRICATION D'UN VERRE DE MONTRE DOTÉ D'AU MOINS UN ÉVIDEMENT ET OUTIL POUR UN TEL PROCÉDÉ

(30) Priorität: 16.05.2019 DE 102019207119
(43) Veröffentlichungstag der Anmeldung: 18.11.2020
(73) Patentinhaber: Realization Desal AG, 6317 Oberwil (CH)
(72) Erfinder: BONKE, Michael, 6317 Oberwil bei Zug (CH)
(74) Vertreter: Hoefer & Partner Patentanwälte mbB

(56) Entgegenhaltungen:
- WO-A1-2013/081119
- US-A- 5 049 177
- US-A1- 2019 023 600

## Beschreibung

Die Erfindung betrifft ein Verfahren zum Herstellen eines Uhrglases mit mindestens einer Ausnehmung sowie ein Werkzeug, welches bei einem derartigen Verfahren benutzt wird. Uhrgläser mit Ausnehmungen zum Aufnehmen von Schmucksteinen, Indizes oder anderen (dekorativen) Elementen sind aus dem Stand der Technik bekannt. Ein solches Uhrglas ist beispielsweise in der DE 10 2015 204613 beschrieben.

WO2013081119 A1 lehrt ein Verfahren zum Pressen eines Abdeckglases mit Einbuchtungen, welches nach dem Pressen poliert werden kann. Der Pressstempel umfasst einen zumindest teilweise umlaufenden Vorsprung und kleinere Vorsprünge innerhalb diesen umlaufenden Vorsprungs. US5049177 A offenbart ein Werkzeug zum Pressen von Glas umfassend einen Grundkürper mit einem umlaufenden Vorsprung und weiteren Vorsprüngen innerhalb des umlaufenden Vorsprungs.

Üblicherweise werden die Ausnehmungen mittels eines mechanischen Bohrers, eines Ultraschalls, eines Laserstrahls oder eines Wasserstrahls in das Uhrglas gebohrt. Diese Mittel weisen allerdings einige Nachteile auf.

Das Bohren einer Ausnehmung bzw. einer Bohrung erfordert eine sehr strikte Positionierung des Werkzeugs, was aber durch die beschriebenen Mittel aufwendig und/oder schwierig sein kann. Dies hat dann zur Folge, dass die Ausnehmung nicht an der exakt dafür vorgesehenen Stelle platziert wird, weshalb das Uhrglas aus Qualitätsgründen nicht mehr verwendet werden kann.

Sollte eine Ausnehmung bei einem Uhrglas mit einer Mehrzahl bzw. Vielzahl von Ausnehmungen Abweichungen von Maß und/oder Form aufweisen oder im Allgemeinen den erwarteten Herstellungserfordernissen nicht genügen, dann bedingt dies, dass das gesamte Glas wertlos ist. Das würde beispielsweise bei einem Uhrglas mit zwölf Ausnehmungen bedeuten, dass eine 5%-ige Fehlerquote bei den Ausnehmungen zu einem Ausschuss von mehr als 50% der Uhrgläser führt. Eine Abweichung von einer perfekten Ausnehmung kann zum Beispiel aufgrund eines Ausplatzers im Glas auftreten.

Außerdem sind die Ausnehmungen nach dem Bohren, unabhängig vom benutzten Mittel, innen aufgeraut. Wenn ein Dekorationselement in die Ausnehmung eingebracht werden soll, führt die Rauheit der Innenfläche der Ausnehmungen zu einer Beeinträchtigung der optischen Wirkung des Uhrglases.

Um dieses Problem auszuräumen und eine hochpolierte Ausnehmung zu erhalten, muss die Ausnehmung in einem zweiten Arbeitsvorgang mit Polierpaste und einem flexiblen Polierzapfen auspoliert werden. Die Innenmaße der Ausnehmung können aber danach keine absolut präzise Form mehr aufweisen.

Insbesondere wenn mechanische Bohrer wie etwa Diamantenbohrer benutzt werden, können keine eckigen Ausnehmungen erzielt werden. Ferner kann beim mechanischen Bohren die Kante der Ausnehmung an der Glasoberfläche aussplittern. Zudem ist zu bemerken, dass im Allgemeinen das Bohren selber ein sehr zeitaufwendiger Vorgang ist, der eventuell mit Wasserkühlung vorgenommen werden muss.

Aufgrund all dieser Nachteile ist eine 100%-ige Einpassung eines Elementes, insbesondere eines Schmucksteins in eine optisch voll transparente und polierte Ausnehmung unter Benutzung der beschriebenen Mittel sehr schwierig zu erlangen.

Es ist daher Aufgabe der Erfindung, ein Verfahren zum Herstellen eines Uhrglases mit mindestens einer Ausnehmung vorzuschlagen, welches die oben geschilderten Nachteile überwindet und insbesondere das Herstellen eines Uhrglases mit einer präziseren Ausnehmung ermöglicht. Es ist ferner Aufgabe der Erfindung, ein Werkzeug zu schaffen, welches bei dem Herstellen eines derartigen Uhrglases benutzt werden kann.

Die Lösung der ersten genannten Aufgabe erfolgt durch ein Verfahren zum Herstellen eines Uhrglases mit mindestens einer Ausnehmung gemäß Anspruch 1.

Insbesondere umfasst das Verfahren die Schritte des Bereitstellens eines Ausgangsglases, welches eine größere Ursprungsdicke als eine vorbestimmte Dicke des Uhrglases aufweist, des Erhitzens des Ausgangsglases auf eine vorbestimmte Temperatur unterhalb der Schmelztemperatur des Ausgangsglases, des Einpressens mindestens einer Ausnehmung in das Ausgangsglas und des Bearbeitens des Ausgangsglases mit der mindestens einen, darin eingepressten Ausnehmung, so dass die Dicke des Ausgangsglases auf die vorbestimmte Dicke des Uhrglases zum Formen/Bilden des Uhrglases reduziert wird. Das Erhitzen des Ausgangsglases dient dazu, dass das Ausgangsglas weich wird, so dass das Einpressen der Ausnehmung erfolgen kann. Die vorbestimmte Temperatur ist insbesondere derart gewählt, dass das Ausgangsglas so weich wird bzw. eine solche Viskosität aufweist, dass die Ausnehmung in das Ausgangsglas eingepresst werden kann, ohne dass das Glas beim Einpressen zerfließt oder sich das Glas nach der Entfernung des entsprechenden Werkzeugs zum Einpressen der Ausnehmung verformt. Vorteilhafterweise ist die vorbestimmte Temperatur größer gleich 90% der Schmelztemperatur und kleiner als die Schmelztemperatur des Ausgangsglases. Durch das vorgeschlagene Verfahren wird ein Uhrglas mit mindestens einer Ausnehmung hergestellt, wobei die Ausnehmung den erwünschten Qualitätserfordernissen im Hinblick auf ihre Maße, Form und Oberflächeneigenschaften genügt. Aufgrund der höheren ursprünglichen Dicke des Ausgangsglases als die vorbestimmte Dicke des Uhrglases wird beim Einpressen der mindestens einen Ausnehmung eine Verformung des Bereichs des Ausgangsglases, welcher zum Schluss dem Uhrglas entsprechen und die Ausnehmung aufweisen soll (Ausnehmungsbereich), vermieden. Somit wird auch eine anderenfalls daraus resultierende Verformung der mindestens einen Ausnehmung vermieden. In diesem Hinblick weist das Ausgangsglas vorteilhafterweise einen Stabilisierungsbereich auf, der eine ursprüngliche Dicke aufweist, die dem Unterschied zwischen der Ursprungsdicke des Ausgangsglases und der vorbestimmten Dicke des Uhrglases entspricht. Insbesondere kann durch das vorgeschlagene Verfahren eine wie oben beschriebene Verformung vermieden werden, da das Ausgangsglas über den Stabilisierungsbereich während des Einpressens der mindestens einen Ausnehmung am Platz stabilisiert werden kann. Somit kann ein optisch qualitatives Erscheinungsbild des Uhrglases erzielt werden, wenn in die Ausnehmung ein dekoratives Element wie etwa ein Schmuckstein eingesetzt wird. Ferner ist es mittels des vorgeschlagenen Verfahrens möglich, Ausnehmungen von unterschiedlichen Formen/Querschnitten, zum Beispiel eckige Ausnehmungen, herzustellen und somit auch Elemente, insbesondere Schmucksteine, von unterschiedlichen Formen im Uhrglas zu verwenden. Dadurch bietet sich insbesondere aufgrund der unterschiedlichen erzielten Lichteffekte aus der Kombination von Ausnehmungen und darin eingesetzten Elementen eine große Vielfalt an Erscheinungsbildern des Uhrglases.

Im Rahmen der Erfindung ist insbesondere als Uhrglas das Endprodukt (fertige Produkt) gemeint. Mit anderen Worten ist das Uhrglas das Glas nach dem Ende des vorgeschlagenen Herstellungsverfahrens. Entsprechend ist im Rahmen der Erfindung das Ausgangsglas insbesondere als das Glas zu verstehen, welches bearbeitet wird bzw. bearbeitet werden muss, um zum Schluss das Uhrglas zu bekommen. Mit anderen Worten wird im Rahmen der Erfindung der Begriff "Ausgangsglas" für das Glas in jedem Schritt des vorgeschlagenen Verfahrens bis das Uhrglas erzielt wird benutzt.

In diesem Zusammenhang bedeutet im Rahmen der Erfindung der Begriff "ursprünglich" mit Bezug auf die Dicke des Ausgangsglases oder des Stabilisierungsbereichs des Ausgangsglases insbesondere, dass das Ausgangsglas und somit auch der Stabilisierungsbereich diejenigen sind vor jeglichem Schritt des vorgeschlagenen Verfahrens, wo eine Verarbeitung des Ausgangsblockes stattfindet.

Insbesondere weist das Ausgangsglas vor dem Beginn dessen Bearbeitens die Form eines Glasblocks, einer Glasplatte, einer Glasstange oder dergleichen auf.

Insbesondere weist ferner die mindestens eine Ausnehmung einen Boden auf. Dies gilt sowohl für die Ausnehmung im Ausgangsglas als auch im fertigen Uhrglas. Mit anderen Worten ist vorteilhafterweise die Ausnehmung keine durchgängige Ausnehmung.

Es ist aber auch möglich, dass die Ausnehmung im Ausgangsglas (d.h. die Ausnehmung direkt nach Einpressvorgang) durchgängig ist. Es ist alternativ möglich, dass durch den Einpressvorgang keine durchgängige Ausnehmung entsteht, die aber dann zu einer durchgängigen Ausnehmung im fertigen Uhrglas wird, insbesondere wenn eine Unterseite des Ausgangsglases im Zuge der weiteren Verarbeitung zurückgeschliffen wird.

Ferner bevorzugt ist eine Einpressrichtung, d.h. eine Richtung, in der sich die Ausnehmung erstreckt, parallel zur Richtung der Dicke des Ausgangsglases.

Vorzugsweise wird eine Mehrzahl von Ausnehmungen, insbesondere identischen Ausnehmungen, in das Ausgangsglas eingepresst.

Bevorzugt wird die mindestens eine Ausnehmung bis zu einer größeren Tiefe als eine vorbestimmte Tiefe der Ausnehmung im Uhrglas eingepresst. Mit anderen Worten wird die Ausnehmung in einem ersten Schritt tiefer als die Ausnehmung des Uhrglases ausgebildet. Dabei umfasst der Schritt des Bearbeitens des Ausgangsglases mit der darin eingepressten mindestens einen Ausnehmung, so dass die Dicke des Ausgangsglases auf die vorbestimmte Dicke des Uhrglases zum Formen des Uhrglases reduziert wird, auch die Reduzierung der Tiefe der Ausnehmung auf die vorbestimmte Tiefe der Ausnehmung des Uhrglases. Durch die anfangs höhere Tiefe der Ausnehmung kann sichergestellt werden, dass eine Maß- und/oder Formabweichung, die unter Umständen durch den Einpressvorgang im Bereich einer Kante der Ausnehmung verursacht werden könnte, nur im Ausgangsglas und nicht im fertigen Uhrglas vorliegen wird. Somit kann direkt positiver Einfluss auf die Herstellungspräzision der mindestens einen Ausnehmung genommen werden. Die Tiefe beim Einpressen wird hier auch als Einpresstiefe bezeichnet.

Gemäß der Erfindung wird das Ausgangsglas umgeformt, so dass im Ausgangsglas ein erster Bereich mit einem ersten Querschnitt und ein zweiter Bereich mit einem zweiten Querschnitt gebildet werden. Dabei weist der erste Bereich die mindestens eine Ausnehmung auf, wobei der erste Querschnitt kleiner als der zweite Querschnitt ist. Besonders bevorzugt entspricht der erste Querschnitt einem vorbestimmten Querschnitt des Uhrglases.

Insbesondere wird das Ausgangsglas zum Bilden des ersten Bereichs und des zweiten Bereichs gepresst. Dazu wird das Ausgangsglas bis zu einer Tiefe gepresst, die kleiner als die Dicke bzw. Ursprungsdicke des Ausgangsglases ist. In diesem Fall entspricht vorzugsweise das Pressen dem Umformen des Ausgangsglases. Das Pressen zum Bilden des ersten Bereichs und des zweiten Bereichs kann vorzugsweise in einem Schritt erfolgen. Die Richtung des Pressens des Ausgangsglases wird im Rahmen der vorliegenden Erfindung als Pressrichtung bezeichnet.

Insbesondere stehen der erste Querschnitt und der zweite Querschnitt im Wesentlichen senkrecht zur Einpressrichtung.

Vorzugsweise wird das Ausgangsglas so umgeformt, dass der erste Bereich eine erste Dicke und der zweite Bereich eine zweite Dicke aufweist. Dabei ist die erste Dicke vorzugweise kleiner als die zweite Dicke. Die Summe aus der ersten Dicke und der zweiten Dicke ist insbesondere größer als die vorbestimmte Dicke des Uhrglases.

Wenn das Ausgangsglas zum Bilden des ersten Bereichs und des zweiten Bereichs gepresst wird, entspricht insbesondere die Tiefe, bis zu der das Ausgangsglas gepresst wird, der ersten Dicke des ersten Bereichs.

Mit anderen Worten ist vorzugsweise die Dicke des Ausgangsglases nach dem Umformen bzw. Pressen des Ausgangsglases zum Bilden des ersten Bereichs und des zweiten Bereichs kleiner als die Ursprungsdicke des Ausgangsglases und größer als die vorbestimmte Dicke des Uhrglases.

Dabei entspricht vorzugsweise der Unterschied zwischen der Dicke des Ausgangsglases nach dem Umformen bzw. Pressen des Ausgangsglases zum Bilden des ersten Bereichs und des zweiten Bereichs der Dicke des Stabilisierungsbereichs in diesem Zustand des Verfahrens.

Bevorzugt kann dabei der zweite Bereich ein Teil des Stabilisierungsbereichs sein. In diesem Fall entsprechen der zweite Bereich und ein Teil des ersten Bereichs vorzugsweise dem Stabilisierungsbereich. Die Dicke des Stabilisierungsbereichs in diesem Zustand des Ausgangsglases ist in vorteilhafter Weise aufgrund des Pressvorgangs kleiner als die ursprüngliche Dicke des Stabilisierungsbereichs. Dabei ist die erste Dicke des ersten Bereichs vorteilhafterweise größer als die vorbestimmte Dicke des Uhrglases. Die zweite Dicke des zweiten Bereichs ist kleiner als die ursprüngliche Dicke des Stabilisierungsbereichs.

Bevorzugt liegt ein Verhältnis der Ursprungsdicke des Ausgangsglases und der vorbestimmten Dicke des Uhrglases in einem Bereich zwischen "2 zu 1" und "4 zu 1", besonders bevorzugt zwischen "4 zu 1" und "6 zu 1".

Insbesondere liegt ein Verhältnis der Dicke des Ausgangsglases nach dem Umformen bzw. dem Pressen des Ausgangsglases, wodurch der erste Bereich und der zweite Bereich gebildet werden, und der vorbestimmten Dicke des Uhrglases in einem Bereich zwischen "2 zu 1" und "4 zu 1", besonders bevorzugt zwischen "4 zu 1" und "6 zu 1".

Nach einer bevorzugten Ausgestaltung der Erfindung weist das fertige Uhrglas eine Dicke zwischen 1,4 mm und 1,8 mm, insbesondere 1,7 mm, auf. Dabei weist der obere Bereich vorzugsweise eine Dicke auf, die um (etwa) 0,5 mm größer als die Dicke des fertigen Uhrglases ist. Der zweite Bereich ist insbesondere (etwa) 6 mm dick.

Das heißt, dass nach dem Umformen bzw. dem Pressen des Ausgangsglases das Ausgangsglas nach dieser bevorzugten Ausgestaltung der Erfindung eine Dicke zwischen 7,9 mm und 8,3, insbesondere gleich 8,2 mm, aufweist.

Vorzugsweise erfolgt das Bilden des ersten Bereichs und des zweiten Bereichs in einem Schritt mit dem Einpressen der Ausnehmung. Mit anderen Worten erfolgt vorzugsweise das zusätzliche Umformen des Ausgangsglases zum Bilden des ersten Bereichs mit einem ersten Querschnitt und des zweiten Bereichs mit einem zweiten Querschnitt im Ausgangsglas gleichzeitig mit dem Einpressen der Ausnehmung. Somit wird das gesamte Verfahren beschleunigt.

Vorteilhafterweise ist eine Richtung des Pressens des Ausgangsglases zum Bilden des ersten Bereichs und des zweiten Bereichs parallel zur Einpressrichtung der Ausnehmung.

Vorzugsweise wird das Ausgangsglas nach dem Einpressen der Ausnehmung oder dem Formen des ersten Bereichs und des zweiten Bereichs und vor dem Bearbeiten des Ausgangsglases zum Reduzieren seiner Dicke auf die vorbestimmte Dicke des Uhrglases zum Formen des Uhrglases abgekühlt. Insbesondere wird das Ausgangsglas bis zu einer Temperatur abgekühlt, bei der das Ausgangsglas hart und nicht mehr verbiegbar ist.

Besonders bevorzugt wird das Ausgangsglas nach einer vorbestimmten Kühlkurve abgekühlt. Dadurch wird das Ausgangsglas entspannt, was den Aufbau von Spannungen im Glas auflöst.

Ferner bevorzugt wird mindestens der zweite Bereich abgeschliffen. "Mindestens" bedeutet, dass entweder nur der zweite Bereich oder der zweite Bereich und ein Teil des erstens Bereichs abgeschliffen werden können. Somit nimmt das Ausgangsglas die endgültige Außenform (Außenkontur) des Uhrglases an und eine Oberseite und eine Unterseite des Ausgangsglases sind nach diesem Schritt parallel zueinander ausgebildet.

Nach dem Abschleifvorgang entspricht das Ausgangsglas vorteilhafterweise dem ersten Bereich, wenn nur der zweite Bereich abgeschliffen wird oder dem restlichen Teil des ersten Bereichs, wenn der zweite Bereich und ein Teil des ersten Bereichs abgeschliffen werden. Vorzugsweise wird nach dem Abschleifen von mindestens dem zweiten Bereich eine Unterseite des Ausgangsglases poliert.

Insbesondere wird eine Unterseite des Ausgangsglases poliert, so dass nach dem Polieren eine Dicke des Ausgangsglases einer Summe aus der vorbestimmten Dicke des Uhrglases und einem Unterschied zwischen der Einpresstiefe und der vorbestimmten Tiefe der Ausnehmung entspricht.

Ferner bevorzugt wird eine Oberseite des Ausgangsglases abgeschliffen und/oder poliert. Insbesondere wird eine Oberseite des Ausgangsglases um den Unterschied zwischen der Einpresstiefe und der vorbestimmten Tiefe der Ausnehmung zum Formen des Uhrglases abgeschliffen und/oder poliert.

Nach einer bevorzugten Ausführungsform der Erfindung erfolgen das Abschleifen und das Polieren der Oberseite des Ausgangsglases vor dem Abschleifen von mindestens dem zweiten Bereich. Alternativ können das Abschleifen von mindestens dem zweiten Bereich und das Polieren der Unterseite des Ausgangsglases bevorzugt vor dem Abschleifen und/oder Polieren der Oberseite des Ausgangsglases erfolgen.

Die Schritte des Abkühlens, Abschleifens und/oder Polierens der Unterseite des Ausgangsglases, und Abschleifens und/oder Polierens der Oberseite des Ausgangsglases können vorteilhafterweise beim Herstellen von vielen Gläsern auf einmal gemacht werden. So können beispielsweise die Glastaler in Stückzahlen von 40 bis 100 auf Schleifteller aufgebracht werden und in einem einzigen Arbeitsvorgang alle zusammen abgeschliffen werden. Insbesondere ist die Oberseite des Ausgangsglases in der Pressrichtung und/oder der Einpressrichtung vor der Unterseite des Ausgangsglases. Mit anderen Worten ist die Oberseite insbesondere die Seite, in die die mindestens eine Ausnehmung eingepresst wird und/oder auf der das Ausgangsglas gepresst wird.

Vorzugsweise entspricht die Pressrichtung der Einpressrichtung.

Die Lösung der zweiten genannten Aufgabe erfolgt durch ein Werkzeug gemäß Anspruch 10, welches einen Grundkörper umfasst, der einen ersten zumindest teilweise umlaufenden Vorsprung zum Pressen eines Ausgangsglases und mindestens einen zweiten Vorsprung zum Einpressen mindestens einer Ausnehmung in das Ausgangsglas aufweist. Dabei ist der zweite Vorsprung in einem inneren Bereich des ersten Vorsprungs angeordnet.

Im Rahmen der Erfindung wird der zweite Vorsprung auch als Zapfen bezeichnet.

Gemäß der Erfindung erstrecken sich der erste zumindest teilweise umlaufende Vorsprung und der mindestens zweite Vorsprung in derselben Richtung.

Besonders bevorzugt ist der erste Vorsprung vollständig umlaufend ausgebildet.

Der erste zumindest teilweise umlaufende Vorsprung steht in vorteilhafter Weise über den zweiten Vorsprung hinaus.

Der erste zumindest teilweise umlaufende Vorsprung ist vorzugsweise ringförmig ausgebildet. Andere Formen sind aber auch möglich.

Bevorzugt ist der zweite Vorsprung aus hochpoliertem Prägestahl ausgebildet.

Bevorzugt weist das Werkzeug eine Mehrzahl von zweiten Vorsprüngen auf.

Insbesondere sind alle zweiten Vorsprünge identisch miteinander, insbesondere hinsichtlich der Form und der Maße, ausgebildet. Es ist aber auch möglich, im Werkzeug unterschiedliche zweite Vorsprünge vorzusehen.

Weitere Einzelheiten, Vorteile und Merkmale der vorliegenden Erfindung ergeben sich aus nachfolgender Beschreibung eines bevorzugten Ausführungsbeispiels anhand der Zeichnung.

Es zeigt:
- Fig. 1: einen ersten Schritt des Verfahrens gemäß dem bevorzugten Ausführungsbeispiel,
- Fig. 2: einen zweiten Schritt des Verfahrens gemäß dem bevorzugten Ausführungsbeispiel,
- Fig. 3: einen dritten Schritt des Verfahrens gemäß dem bevorzugten Ausführungsbeispiel,
- Fig. 4a: einen vierten Schritt des Verfahrens gemäß dem bevorzugten Ausführungsbeispiel,
- Fig. 4b: das Produkt nach dem vierten Schritt von Fig. 4a,
- Fig. 5: einen fünften Schritt des Verfahrens gemäß dem bevorzugten Ausführungsbeispiel,
- Fig. 6: einen sechsten Schritt des Verfahrens gemäß dem bevorzugten Ausführungsbeispiel, und
- Fig. 7: das durch das Verfahren hergestellte Uhrglas.

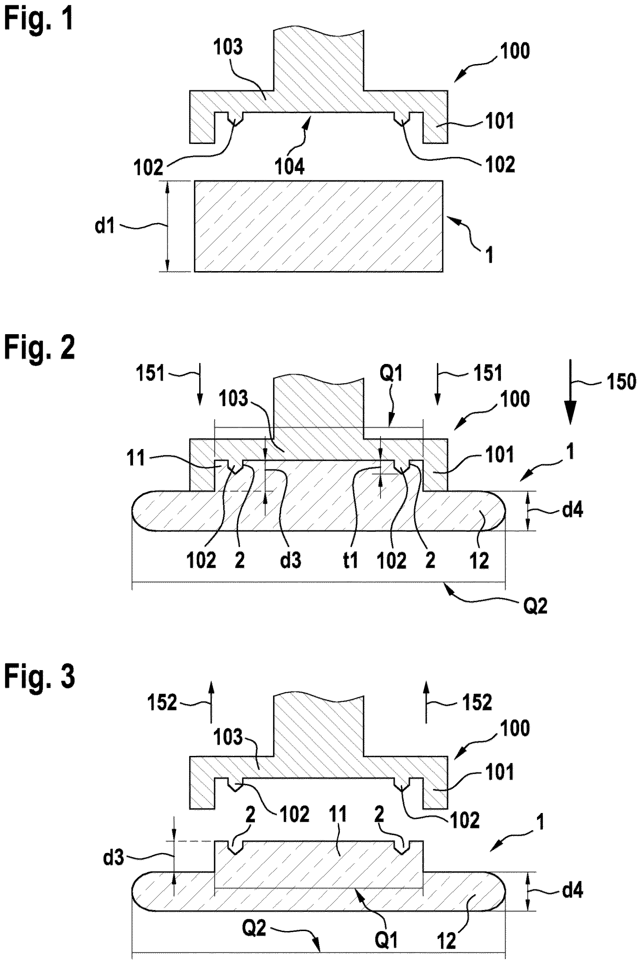

Nachfolgend wird anhand von Figuren 1 bis 7 ein Verfahren zum Herstellen eines Uhrglases mit mindestens einer Ausnehmung gemäß einem bevorzugten Ausführungsbeispiel im Detail beschrieben.

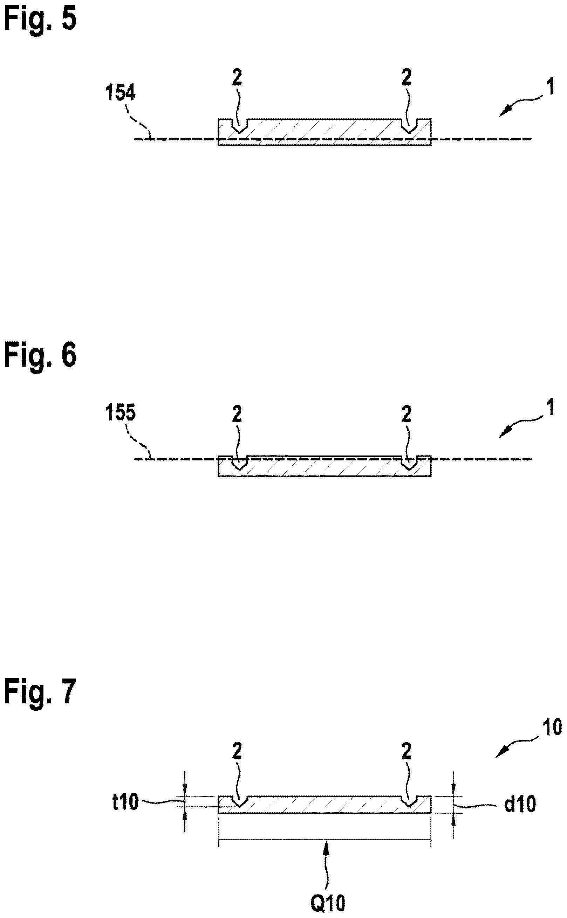

Das fertige Uhrglas 10, welches eine vorbestimmte Dicke d10 aufweist, ist in Figur 7 dargestellt, wobei Figuren 1 bis 6 die Schritte des bevorzugten Ausführungsbeispiels des Verfahrens zeigen. Beim Verfahren wird ein Werkzeug 100 verwendet, welches in Figuren 1 bis 3 zu sehen ist.

Figur 1 zeigt einen ersten Schritt des Verfahrens.

In diesem Schritt wird ein Ausgangsglas 1 bereitgestellt, welches eine größere Ursprungsdicke d1 als die vorbestimmte Dicke d10 des Uhrglases 10 aufweist. Insbesondere ist ein Verhältnis der Ursprungsdicke d1 des Ausgangsglases 1 zu der vorbestimmten Dicke d10 des Uhrglases 10 zwei zu eins, bevorzugt drei zu eins, besonders bevorzugt 4 zu 1. Aufgrund des Übermaßes des Ausgangsglases 1 kann ein genaueres Herstellen des Uhrglases und dessen Ausnehmung(en) ermöglicht werden. Dies wird später mit Bezug auf die weiteren Schritte des Verfahrens näher erläutert.

Das Ausgangsglas 1 ist insbesondere in der Form eines Glasblocks ausgebildet. Es ist aber auch möglich, dass das Ausgangsglas 1 die Form einer Glasstange, einer Glasplatte oder dergleichen hat.

Im Rahmen der Erfindung ist das Ausgangsglas 1 als das Glas zu verstehen, welches bearbeitet wird bzw. weiterbearbeitet werden muss, um zum Schluss das Uhrglas 10 zu bekommen. Mit anderen Worten wird im Rahmen der Erfindung der Begriff "Ausgangsglas" für das Glas in jedem Schritt des vorgeschlagenen Verfahrens bis zum Herstellen des Uhrglases 10 benutzt.

In diesem Zusammenhang bedeutet im Rahmen der Erfindung der Begriff "Ursprungsdicke" die Dicke des Ausgangsglases 1 vor jeglicher Bearbeitung des Ausgangsglases 1. Das heißt, dass sich eine Dicke des Ausgangsglases 1 in den weiteren Schritten des Verfahrens von der Ursprungsdicke d1 unterscheidet.

Wie aus Figur 1 ersichtlich ist, umfasst das Werkzeug 100 einen Grundkörper 103, der einen ersten umlaufenden Vorsprung 101 zum Pressen des Ausgangsglases 1 und mindestens einen zweiten Vorsprung 102 zum Einpressen der mindestens einen Ausnehmung 2 in das Ausgangsglas 1 aufweist.

In diesem Fall ist das Werkzeug 100 mit zwei zweiten Vorsprüngen 102 versehen, die insbesondere identisch ausgebildet sind. Die zweiten Vorsprünge 102 sind in einem inneren Bereich 104 des ersten umlaufenden Vorsprungs 101 angeordnet und sind eingerichtet, zwei Ausnehmungen in das Ausgangsglas einzupressen.

Der erste umlaufende Vorsprung 101 und die zwei zweiten Vorsprünge 102 erstrecken sich in derselben Richtung.

Ferner steht der erste umlaufende Vorsprung 101 in der Einpressrichtung 150 über die zweiten Vorsprünge 102 hinaus.

Figur 2 zeigt einen zweiten Schritt des Verfahrens.

In diesem Schritt wird das Ausgangsglas 1 auf eine vorbestimmte Temperatur unterhalb der Schmelztemperatur des Ausgangsglases 1 erhitzt, so dass das Ausgangsglas 1 weich wird und dessen weitere Bearbeitung somit erleichtert wird. Danach werden zwei identische Ausnehmungen 2 mittels der zweiten Vorsprünge 102 des Werkzeugs 100 in das Ausgangsglas 1 eingepresst. Dazu wird vorzugsweise das Werkzeug 100 gesenkt (Pfeile 151), bis die Ausnehmungen 2 im Ausgangsglas 1 vollständig ausgebildet sind.

Aus Figur 2 ist ersichtlich, dass die Ausnehmungen 2 bis zu einer Tiefe t1 (Einpresstiefe) eingepresst werden. Die Einpresstiefe t1 ist größer als eine vorbestimmte, zu erzielende Tiefe t10 der Ausnehmungen 2 im Uhrglas 1 (Figur 7). Die Tiefe t1 entspricht einer Länge der zweiten Vorsprünge 102 (gemessen vom Grundkörper 103).

Gleichzeitig mit dem Einpressen der Ausnehmungen 2 in das Ausgangsglas 1 wird das Ausgangsglas 1 umgeformt, so dass im Ausgangsglas 1 ein erster Bereich 11 mit einem ersten Querschnitt Q1 und ein zweiter Bereich 12 mit einem zweiten Querschnitt Q2 gebildet werden. Hierbei weist der erste Bereich 11 die Ausnehmungen 2 auf.

Insbesondere wird das Ausgangsglas 1 zum Bilden des ersten Bereichs 11 und des zweiten Bereichs 12 mittels des ersten umlaufenden Vorsprungs 101 des Werkzeugs 100 gepresst. Die Pressrichtung des Ausgangsglases 1 entspricht der Einpressrichtung 150. Die zweiten Vorsprünge 102 sowie der erste umlaufende Vorsprung 101 erstrecken sich in der Pressrichtung oder Einpressrichtung 150 des Ausgangsglases 1.

Durch das Pressen des Ausgangsglases 1 entsteht der erste Bereich 11 mit einem kleineren ersten Querschnitt Q1 als der zweite Querschnitt Q2 des zweiten Bereichs 12. Insbesondere entspricht der erste Querschnitt Q1 einem vorbestimmten Querschnitt Q10 des Uhrglases 10. Dazu ist vorzugsweise das Werkzeug 100 derart ausgebildet, dass eine innere Kontur des ersten umlaufenden Vorsprungs 101 einer zu erzielenden Außenkontur des Uhrglases 10 entspricht bzw. mit der zu erzielenden Außenkontur des Uhrglases 10 komplementär ist.

Außerdem wird das Ausgangsglas 1 so umgeformt, dass der erste Bereich 11 eine erste Dicke d3 und der zweite Bereich 12 eine zweite Dicke d4 aufweist, wobei die erste Dicke d3 kleiner als die zweite Dicke d4 ist. Die Summe aus der ersten Dicke d3 und der zweiten Dicke d4 ist aufgrund des Pressvorgangs insbesondere kleiner als die Ursprungsdicke d1 des Ausgangsglases 1 und größer als die vorbestimmte, zu erzielende Dicke d10 des Uhrglases 10. Ferner ist die erste Dicke d3 größer als die vorbestimmte Dicke d10 des Uhrglases 10.

Durch das Übermaß des Ausgangsglases 1 wird ermöglicht, dass beim Einpressen der Ausnehmungen 2 in das Ausgangsglas 1 der Bereich des Ausgangsglases 1, der zum Schluss dem Uhrglas 10 entsprechen soll, nicht verformt wird. Somit können auch die Ausnehmungen 2 in diesem Bereich präzise ausgebildet werden.

Insbesondere ist ein Verhältnis der Ursprungsdicke d1 des Ausgangsglases 1 zu der vorbestimmten Dicke d10 des Uhrglases 10 zwei zu eins, bevorzugt drei zu eins, besonders bevorzugt vier zu eins.

In einem dritten Schritt des Verfahrens gemäß Figur 3 wird nach dem Einpressen der Ausnehmungen 2 in das Ausgangsglas 1 und dem Bilden des ersten Bereichs 11 und des zweiten Bereichs 12 das Werkzeug 100 aus dem Ausgangsglas 1 entfernt (Pfeile 152). Ferner wird das Ausgangsglas 1 nach einer vorbestimmten Kühlkurve zum Entspannen des Ausgangsglases 1 abgekühlt.

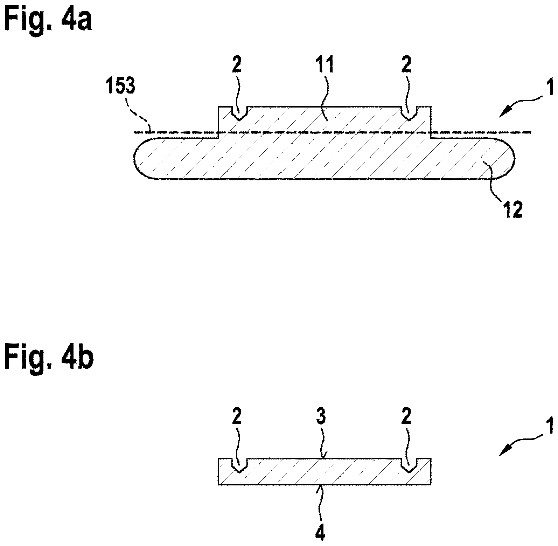

Figur 4a veranschaulicht einen vierten Schritt des Verfahrens, wobei Figur 4b das Ausgangsglas 1 nach dem Ende des vierten Schrittes zeigt.

In vierten Schritt wird der zweite Bereich 12 zusammen mit einem Teil des ersten Bereichs 11 abgeschliffen. Dies ist in Figur 4a durch die gestrichelte Linie 153 angedeutet. Durch den Abschleifvorgang nimmt das Ausgangsglas 1 die zu erzielende Außenkontur des Uhrglases 10 an, wobei auch eine Oberseite 3 und eine Unterseite 4 des Ausgangsglases 1 parallel zueinander ausgebildet sind (Figur 4b). Mit anderen Worten entspricht ein Querschnitt des Ausgangsglases 1 nach dem vierten Schritt dem vorbestimmten Querschnitt Q10 des Uhrglases 10.

Anschließend wird in einem fünften Verfahren gemäß Figur 5 die Unterseite 4 des Ausgangsglases 1 poliert. Dies ist in Figur 5 durch die gestrichelte Linie 154 angedeutet. Insbesondere wird die Unterseite 4 so poliert, dass nach dem Polieren eine Dicke des Ausgangsglases 1 einer Summe aus der vorbestimmten Dicke d10 des Uhrglases 10 und einem Unterschied zwischen der Einpresstiefe t1 und der vorbestimmten Tiefe t10 der Ausnehmungen 2 entspricht.

Zum Schluss wird in einem sechsten Schritt gemäß Figur 6 die Oberseite 3 des Ausgangsglases 1 abgeschliffen und/oder poliert. Dies ist in Figur 6 durch die gestrichelte Linie 155 angedeutet. Insbesondere wird die Oberseite 3 um den Unterschied zwischen der Einpresstiefe t1 und der vorbestimmten Tiefe t10 der Ausnehmungen 2 zum Bilden des Uhrglases 10 abgeschliffen und/oder poliert.

Nach dem Ende des sechsten Schritts wird das Uhrglas 10 erhalten (Figur 7).

Es sei angemerkt, dass nach der vorgehenden Beschreibung das Abschleifen des zweiten Bereichs 12 und eines Teils des ersten Bereichs 11 sowie das Polieren der Unterseite 4 des Ausgangsglases 1 vor dem Abschleifen und/oder Polieren der Oberseite 3 des Ausgangsglases 1 erfolgt.

Es ist aber auch möglich, dass das Abschleifen und/oder das Polieren der Oberseite 3 des Ausgangsglases 1 vor dem Abschleifen des zweiten Bereichs 12 und des einen Teils des ersten Bereichs 11 erfolgen.

Neben der vorstehenden schriftlichen Beschreibung der Erfindung wird zu deren ergänzender Offenbarung hiermit explizit auf die zeichnerische Darstellung der Erfindung in den Fig. 1 bis 7 Bezug genommen.

### Bezugszeichenliste

- 1: Ausgangsglas
- 2: Ausnehmung
- 3: Oberseite des Ausgangsglases
- 4: Unterseite des Ausgangsglases
- 10: Uhrglas
- 11: erster Bereich
- 12: zweiter Bereich
- 100: Werkzeug
- 101: erster umlaufender Vorsprung des Werkzeugs
- 102: zweiter Vorsprung des Werkzeugs
- 103: Grundkörper des Werkzeugs
- 104: innerer Bereich des ersten umlaufenden Vorsprungs
- 150: Einpressrichtung / Pressrichtung
- 151: Pfeile
- 152: Pfeile
- 153: gestrichelte Linie
- 154: gestrichelte Linie
- 155: gestrichelte Linie
- d1: Ursprungsdicke des Ausgangsglases
- d3: erste Dicke des ersten Bereichs
- d4: zweite Dicke des zweiten Bereichs
- d10: vorbestimmte Dicke des Uhrglases
- Q1: erster Querschnitt des ersten Bereichs
- Q2: zweiter Querschnitt des zweiten Bereichs
- t1: Tiefe / Einpresstiefe der Ausnehmung
- t10: vorbestimmte Tiefe der Ausnehmung

## Patentansprüche

1. Verfahren zum Herstellen eines Uhrglases (10) mit mindestens einer Ausnehmung für ein dekoratives Element, insbesondere einen Schmuckstein, umfassend die Schritte:
• Bereitstellen eines Ausgangsglases (1), welches eine größere Ursprungsdicke (d1) als eine vorbestimmte Dicke (d10) des Uhrglases (10) aufweist,
• Erhitzen des Ausgangsglases (1) auf eine vorbestimmte Temperatur unterhalb der Schmelztemperatur des Ausgangsglases (1), so dass das Ausgangsglas (1) weich wird, so dass ein Einpressen einer Ausnehmung in das Ausgangsglas (1) erfolgen kann,
• Einpressen mindestens einer Ausnehmung (2) für ein dekoratives Element, insbesondere einen Schmuckstein, in das Ausgangsglas (1), und
• Bearbeiten des Ausgangsglases (1) mit der darin eingepressten mindestens einen Ausnehmung (2), so dass die Dicke des Ausgangsglases (1) auf die vorbestimmte Dicke (d10) des Uhrglases (10) zum Formen des Uhrglases (10) reduziert wird,
wobei die mindestens eine Ausnehmung (2) bis zu einer größeren Tiefe (t1) als eine vorbestimmte Tiefe (t10) der Ausnehmung (2) im Uhrglas (10) eingepresst wird, und
wobei das Ausgangsglas (1) umgeformt wird, so dass im Ausgangsglas (1) ein erster Bereich (11) mit einem ersten Querschnitt (Q1) und ein zweiter Bereich (12) mit einem zweiten Querschnitt (Q2) gebildet werden, wobei der erste Querschnitt (Q1) kleiner als der zweite Querschnitt (Q2) ist und einem vorbestimmten Querschnitt (Q10) des Uhrglases (10) entspricht, und der erste Bereich (11) die mindestens eine Ausnehmung (2) aufweist.

2. Verfahren nach Anspruch 1, wobei das Ausgangsglas (1) so umgeformt wird, dass der erste Bereich (11) eine erste Dicke (d3) und der zweite Bereich (12) eine zweite Dicke (d4) aufweist, wobei die erste Dicke (d3) kleiner als die zweite Dicke (d4) ist.

3. Verfahren nach Anspruch 2, wobei ein Verhältnis der Ursprungsdicke (d1) des Ausgangsglases (1) zu der vorbestimmten Dicke (d10) des Uhrglases (10) zumindest zwei zu eins, bevorzugt zumindest drei zu eins, besonders bevorzugt zumindest vier zu eins ist.

4. Verfahren nach einem der Ansprüche 1 bis 3, wobei das Formen des ersten Bereichs (11) und des zweiten Bereichs (12) in einem Schritt mit dem Einpressen der Ausnehmung (2) erfolgt.

5. Verfahren nach einem der vorherigen Ansprüche, wobei das Ausgangsglas (1) nach dem Einpressen der Ausnehmung (2) oder dem Formen des ersten Bereichs (11) und des zweiten Bereichs (12) und vor dem Bearbeiten des Ausgangsglases (1) abgekühlt wird.

6. Verfahren nach einem der Ansprüche 1 bis 5, wobei mindestens der zweite Bereich (12) abgeschliffen wird.

7. Verfahren nach Anspruch 6, wobei eine Unterseite (4) des Ausgangsglases (1) nach dem Abschleifen mindestens des zweiten Bereichs (12) poliert wird.

8. Verfahren nach einem der vorherigen Ansprüche, wobei eine Oberseite (3) des Ausgangsglases (1) abgeschliffen und/oder poliert wird.

9. Verfahren nach einem der Ansprüche 6 bis 8, wobei:
• das Abschleifen und/oder das Polieren der Oberseite (3) des Ausgangsglases (1) vor dem Abschleifen von mindestens dem zweiten Bereich (12) erfolgt, oder
• das Abschleifen mindestens des zweiten Bereichs (12) und das Polieren der Unterseite (4) des Ausgangsglases (1) vor dem Abschleifen und/oder Polieren der Oberseite (3) des Ausgangsglases (1) erfolgt.

10. Werkzeug (100), welches eingerichtet ist, bei einem Verfahren nach einem der Ansprüche 1 bis 9 benutzt zu werden, umfassend einen Grundkörper (103), der einen ersten zumindest teilweise umlaufenden Vorsprung (101) zum Pressen eines Ausgangsglases (1) und mindestens einen zweiten Vorsprung (102) zum Einpressen mindestens einer Ausnehmung (2) für ein dekoratives Element, insbesondere einen Schmuckstein, in das Ausgangsglas (1) aufweist, wobei der zweite Vorsprung (102) in einem inneren Bereich (104) des ersten Vorsprungs (101) angeordnet ist, wobei sich der erste zumindest teilweise umlaufende Vorsprung (101) und der mindestens zweite Vorsprung (102) in derselben Richtung erstrecken.

## Claims

1. A method for producing a watch glass (10) with at least one recess for a decorative element, in particular a gemstone, comprising the steps:
- providing a starting glass (1), which has an original thickness (d1) greater than a predetermined thickness (d10) of the watch glass (10),
- heating the starting glass (1) to a predetermined temperature below the melting temperature of the starting glass (1), so that the starting glass (1) becomes soft, so that a press-fitting of a recess into the starting glass (1) can be performed,
- press-fitting at least one recess (2) for a decorative element, in particular a gemstone, into the starting glass (1), and
- processing the starting glass (1) with the at least one recess (2) pressed therein, so that the thickness of the starting glass (1) is reduced to the predetermined thickness (d10) of the watch glass (10) to form the watch glass (10),
wherein the at least one recess (2) is pressed into the watch glass (10) to a depth (t1) greater than a predetermined depth (t10) of the recess (2), and
wherein the starting glass (1) is deformed, so that a first region (11) with a first cross-section (Q1) and a second region (12) with a second cross-section (Q2) are formed in the starting glass (1), wherein the first cross-section (Q1) is smaller than the second cross-section (Q2) and corresponds to a predetermined cross-section (Q10) of the watch glass (10), and the first region (11) comprises the at least one recess (2).

2. The method according to claim 1, wherein the starting glass (1) is deformed, such that the first region (11) has a first thickness (d3) and the second region (12) has a second thickness (d4), wherein the first thickness (d3) is smaller than the second thickness (d4).

3. The method according to claim 2, wherein a ratio of the original thickness (d1) of the starting glass (1) to the predetermined thickness (d10) of the watch glass (10) is at least two to one, preferably at least three to one, particularly preferably at least four to one.

4. The method according to one of claims 1 to 3, wherein the forming of the first region (11) and the second region (12) is performed in one step with the press-fitting of the recess (2).

5. The method according to one of the preceding claims, wherein the starting glass (1) is cooled after the press-fitting of the recess (2) or the forming of the first region (11) and the second region (12) and before the processing of the starting glass (1).

6. The method according to one of claims 1 to 5, wherein at least the second region (12) is ground.

7. The method according to claim 6, wherein an underside (4) of the starting glass (1) is polished after grinding at least the second region (12).

8. The method according to one of the preceding claims, wherein an upper side (3) of the starting glass (1) is ground and/or polished.

9. The method according to any one of claims 6 to 8, wherein:
- the grinding and/or the polishing of the upper side (3) of the starting glass (1) is performed before the grinding of at least the second region (12), or
- the grinding of at least the second region (12) and the polishing of the underside (4) of the starting glass (1) is performed before the grinding and/or polishing of the upper side (3) of the starting glass (1).

10. A tool (100), which is adapted to be used in a method according to any one of claims 1 to 9, comprising a base body (103), which comprises a first at least partially circumferential projection (101) for press-fitting a starting glass (1) and at least one second projection (102) for press-fitting at least one recess (2) for a decorative element, in particular a gemstone, into the starting glass (1), wherein the second projection (102) is arranged in an inner region (104) of the first projection (101), wherein the first at least partially circumferential projection (101) and the at least second projection (102) extend in the same direction.

## Revendications

1. Procédé de fabrication d'un verre de montre (10) avec au moins un évidement pour un élément décoratif, en particulier une gemme, comprenant les étapes :
- de fourniture d'un verre initial (1), lequel présente une épaisseur d'origine (d1) plus grande qu'une épaisseur prédéfinie (d10) du verre de montre (10),
- de chauffage du verre initial (1) à une température prédéfinie sous la température de fusion du verre initial (1) de telle sorte que le verre initial (1) est mou de telle sorte qu'un enfoncement d'un évidement dans le verre initial (1) peut être effectué,
- d'enfoncement d'au moins un évidement (2) pour un élément décoratif, en particulier une gemme, dans le verre initial (1), et
- d'usinage du verre initial (1) avec l'au moins un évidement (2) enfoncé de telle sorte que l'épaisseur du verre initial (1) est réduite à l'épaisseur prédéfinie (d10) du verre de montre (10) pour former le verre de montre (10),
dans lequel l'au moins un évidement (2) est enfoncé jusqu'à une profondeur (t1) plus grande qu'une profondeur prédéfinie (t10) de l'évidement (2) dans le verre de montre (10), et
dans lequel le verre initial (1) est façonné de telle sorte qu'une première zone (11) avec une première section transversale (Q1) et une deuxième zone (12) avec une deuxième section transversale (Q2) sont formées dans le verre initial (1), dans lequel la première section transversale (Q1) est plus petite que la deuxième section transversale (Q2) et correspond à une section transversale prédéfinie (Q10) du verre de montre (10), et la première zone (11) présente l'au moins un évidement (2).

2. Procédé selon la revendication 1, dans lequel le verre initial (1) est façonné de telle sorte que la première zone (11) présente une première épaisseur (d3) et la deuxième zone (12) présente une deuxième épaisseur (d4), dans lequel la première épaisseur (d3) est plus petite que la deuxième épaisseur (d4).

3. Procédé selon la revendication 2, dans lequel un rapport entre l'épaisseur d'origine (d1) du verre initial (1) et l'épaisseur prédéfinie (d10) du verre de montre (10) est de 2:1, de manière préférée au moins de 3:1, de manière particulièrement préférée de 4:1.

4. Procédé selon l'une quelconque des revendications 1 à 3, dans lequel le formage de la première zone (11) et de la deuxième zone (12) est effectué dans une étape avec l'enfoncement de l'évidement (2).

5. Procédé selon l'une quelconque des revendications précédentes, dans lequel le verre initial (1) est refroidi après l'enfoncement de l'évidement (2) ou le formage de la première zone (11) et de la deuxième zone (12) et avant l'usinage du verre initial (1).

6. Procédé selon l'une quelconque des revendications 1 à 5, dans lequel au moins la deuxième zone (12) est meulée.

7. Procédé selon la revendication 6, dans lequel un côté inférieur (4) du verre initial (1) est poli après le meulage d'au moins la deuxième zone (12).

8. Procédé selon l'une quelconque des revendications précédentes, dans lequel un côté supérieur (3) du verre initial (1) est meulé et/ou poli.

9. Procédé selon l'une quelconque des revendications 6 à 8, dans lequel :
- le meulage et/ou le polissage du côté supérieur (3) du verre initial (1) sont effectués avant le meulage d'au moins la deuxième zone (12), ou
- le meulage d'au moins la deuxième zone (12) et le polissage du côté inférieur (4) du verre initial (1) sont effectués avant le meulage et/ou le polissage du côté supérieur (3) du verre initial (1).

10. Outil (100), lequel est mis au point pour être utilisé lors d'un procédé selon l'une quelconque des revendications 1 à 9, comprenant un corps de base (103), qui présente une première partie faisant saillie (101) au moins en partie périphérique pour presser un verre initial (1) et au moins une deuxième partie faisant saillie (102) pour enfoncer au moins un évidement (2) pour un élément décoratif, en particulier une gemme, dans le verre initial (1), dans lequel la deuxième partie faisant saillie (102) est disposée dans une zone intérieure (104) de la première partie faisant saillie (101), dans lequel la première partie faisant saillie (101) au moins en partie périphérique et l'au moins une deuxième partie faisant saillie (102) s'étendent dans la même direction.
